# FASCICULE DE BREVET EUROPEEN

(11) **EP 3 476 727 B1**
(45) Date de publication et mention de la délivrance du brevet: **08.03.2023**
(21) Numéro de dépôt: 18202981.9
(22) Date de dépôt: 26.10.2018
(51) Int. Cl.: B64C 25/34, B64C 25/36, B64C 25/40, B64C 25/42

(54) **ATTERRISSEUR D'AÉRONEF À ROUES FREINÉES ET ROUES MOTORISÉES**
FAHRWERK EINES LUFTFAHRZEUGS MIT GEBREMSTEN RÄDERN UND MOTORISIERTEN RÄDERN
AIRCRAFT LANDING GEAR WITH BRAKED WHEELS AND POWER-DRIVEN WHEELS

(30) Priorité: 27.10.2017 FR 1760199
(43) Date de publication de la demande: 01.05.2019
(73) Titulaire: Safran Landing Systems, 78140 Vélizy-Villacoublay (FR)
(72) Inventeur: RAVEL, Jean-Yves, 78140 VELIZY-VILLACOUBLAY (FR)
(74) Mandataire: Lavialle, Bruno François Stéphane

(56) Documents cités:
- EP-A1- 2 243 703
- EP-A1- 3 100 949
- WO-A1-2006/071262
- FR-A1- 3 019 796
- GB-A- 2 483 472
- US-A1- 2008 258 014

## Description

L'invention concerne un atterrisseur d'aéronef à roues freinées et roues motorisées.

### ARRIERE PLAN DE L'INVENTION

On connaît atterrisseurs d'aéronef portant des roues associées chacune à un frein. Des développements récents conduisent à proposer une motorisation de ces roues pour permettre un déplacement de l'aéronef sans l'aide de ses groupes motopropulseurs. L'équipement d'une roue avec un moteur alors que celle-ci est déjà équipée d'un frein se révèle techniquement difficile, notamment pour des questions d'encombrement et de refroidissement. En particulier, la jante de la roue est déjà passablement remplie par les disques du frein, et il y a très peu de place pour disposer un moteur et son dispositif d'accouplement dans l'espace disponible à proximité immédiate de la roue. Aussi a-t-il été proposé de spécialiser les roues en équipant un aéronef à la fois de roues uniquement freinées et de roues uniquement motorisées, qui sont chacune bien plus simples à concevoir et monter sur un atterrisseur. En particulier, il a été proposé dans le document FR3019796, de disposer sur les atterrisseurs uniquement des roues freinées, et de disposer sur une jambe auxiliaire une ou des roues motorisées, la jambe auxiliaire étant déployée une fois l'aéronef posé au sol pour déplacer l'aéronef. Cet agencement suppose la gestion du déploiement d'au moins une jambe supplémentaire, ce qui complexifie la gestion des atterrisseurs. EP2243703 et GB2483472 décrivent des atterrisseurs d'aéronef.

### OBJET DE L'INVENTION

L'invention vise à proposer une simplification de cet agencement, tout en retenant le principe de spécialisation des roues.

### PRESENTATION DE L'INVENTION

En vue de la réalisation de ce but, on propose un atterrisseur d'aéronef tel que revendiqué dans la revendication 1.

Les termes avant et arrière sont à comprendre en référence à un sens d'avancement habituel de l'aéronef. Ainsi, les roues, toutes en étant spécialisées, sont portées par un même atterrisseur, de sorte qu'il est inutile de faire appel à une jambe supplémentaire, les atterrisseurs étant alors gérés de façon habituelle. L'ensemble des roues supporte le poids de l'aéronef et contribue donc activement à la répartition dudit poids sur la piste tant à l'atterrissage qu'au roulage. La spécialisation de chacun des essieux permet en outre de simplifier l'acheminement des câbles et tuyaux en ségrégant de part et d'autre de la jambe les câbles et tuyaux nécessaires à la commande des freins et les câbles nécessaires à la commande des moteurs d'entraînement.

### DESCRIPTION DES FIGURES

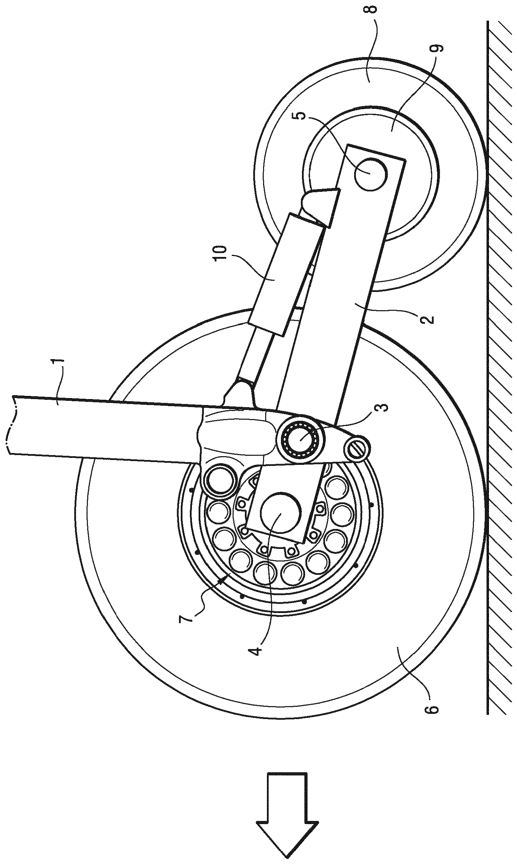

L'invention sera mieux comprise à la lumière de la description qui suit d'un mode particulier de réalisation de l'invention, en référence à l'unique figure annexée qui est une vue de côté partielle d'un atterrisseur d'aéronef selon l'invention en position déployée, deux des roues cachant normalement le balancier ayant été omises pour plus de clarté.

### DESCRIPTION DETAILLEE DE L'INVENTION

L'atterrisseur de l'invention illustré ici comporte une jambe 1 solidarisée à la structure de l'aéronef et qui porte en partie basse un balancier 2 articulé sur la jambe en un pivot 3. Le balancier porte un essieu avant 4 s'étendant en avant du pivot 3, et un essieu arrière 5 s'étendant en arrière du pivot 3. La flèche vers la gauche sur la figure indique le sens d'avancement habituel de l'aéronef.

Selon l'invention, l'essieu avant 4 porte deux roues 6 munies de freins 7 (appelées ici roues freinées, une seule étant visible ici) tandis que l'essieu arrière 5 porte deux roues 8 munies de moteurs d'entraînement 9 (appelées ici roues motorisées, une seule étant visible ici). Ainsi, lors de l'atterrissage, les roues freinées 6 et les roues motorisées 8 touchent le sol et contribuent ensemble à transmettre le poids de l'aéronef au sol. Seules les roues freinées 6 contribuent au ralentissement de l'aéronef. Lorsque l'aéronef est posé au sol, il est alors possible de déplacer celui-ci au moyen des roues motorisées 8. La séquence de manœuvre des atterrisseurs est strictement identique à celle d'un aéronef classique.

Les roues freinées et motorisées n'ayant pas la même fonction, il est possible de leur donner des caractéristiques fonctionnelles (diamètre, taille et pression de gonflage des pneumatiques...) distinctes pour optimiser leur fonctionnement. Ainsi, dans l'exemple illustré, les roues freinées 6 et leurs pneumatiques ont un diamètre plus important que celui des roues motorisées 7. De même, le pivot 3 n'est pas forcément positionné au centre du balancier 2, mais peut être décalé pour faire porter plus de poids sur les roues de l'un ou l'autre des essieux. Ici en l'occurrence, le pivot 3 est plus près de l'essieu avant 4 que de l'essieu arrière 5 de sorte que les roues freinées 6 sont plus chargées que les roues motorisées 8.

Selon un aspect particulier de l'invention, un amortisseur de tangage 10 est attelé entre la jambe 1 et le balancier 2 pour exercer au moins l'une des actions suivantes :
- contrôler l'angle entre le balancier 2 et la jambe 1 pendant la phase de relevage de l'atterrisseur ;
- amortir les mouvements d'oscillation du balancier autour du pivot 3 ;
- répartir la charge verticale reprise par les roues avant et arrière en exerçant un effort commandé de poussée sur le balancier 2.

A cet effet, l'amortisseur de tangage 10 comporte des moyens de réglage commandés pour faire varier sa longueur, sa raideur et/ou son amortissement. En particulier, l'amortisseur 10 est commandé pour appliquer un effort sur le balancier 3 tendant à plaquer les roues motorisées 8 contre le sol lorsque les moteurs de celles-ci sont sollicités pour faire avancer l'aéronef, ce qui a pour effet d'augmenter la charge sur lesdites roues et ainsi augmenter leur efficacité pour l'entraînement de l'aéronef. En outre, un tel effort peut aider au décollage de l'aéronef en allongeant artificiellement la jambe par rotation du balancier lorsque les roues freinées quittent le sol.

L'invention n'est pas limitée à ce qui vient d'être décrit, mais englobe au contraire toute variante entrant dans le cadre défini par les revendications. En particulier, bien qu'ici chaque essieu porte deux roues, on pourra appliquer l'invention à un atterrisseur dont chaque essieu ne porte qu'une roue, ou au contraire plus de deux roues, du moment que chaque essieu ne porte qu'un seul type de roues (roue freinée ou roue motorisée).

En outre, bien qu'ici la répartition de la charge sur les roues de l'essieu avant et les roues de l'essieu arrière puisse être modifiée en commandant l'amortisseur de tangage pour qu'il exerce un effort sur le balancier, on pourra utiliser d'autres moyens pour répartir cette charge, comme par exemple prévoir un déplacement longitudinal du pivot 3 du balancier 2.

## Revendications

1. Atterrisseur d'aéronef muni en partie basse d'un balancier (2) portant au moins deux essieux (4,5) dont l'un en avant d'une articulation (3) du balancier sur l'atterrisseur et l'autre en arrière de ladite articulation, l'un des essieux est équipé d'une ou plusieurs roues (6) munies de freins (7) et dépourvues de moteur d'entraînement tandis que l'autre des essieux est équipé d'une ou plusieurs roues (8) munies de moteurs d'entraînement (9) et dépourvues de frein, **caractérisé en ce que** l'atterrisseur comporte un amortisseur de tangage (10) commandable pour appliquer un effort sur le balancier (3) tendant à plaquer les roues (8) munies de moteurs d'entraînement (9) contre le sol et à augmenter la charge reprise par lesdites roues munies de moteurs d'entraînement de manière à augmenter leur efficacité pour l'entraînement de l'aéronef.

2. Atterrisseur selon la revendication 1, dans lequel les roues (6) munies de freins sont portées par l'essieu avant (4) et les roues (8) munies de moteurs d'entraînement sont portées par l'essieu arrière (8).

3. Atterrisseur selon la revendication 1, dans lequel l'amortisseur de tangage (10) agit sur le balancier pour exercer au moins l'une des actions suivantes :
- contrôler l'angle entre le balancier 2 et la jambe 1 pendant la phase de relevage de l'atterrisseur ;
- amortir les mouvements d'oscillation du balancier (2) autour du pivot (3) ;
- répartir la charge verticale reprise par les roues en exerçant un effort commandé de poussée sur le balancier (2).

## Patentansprüche

1. Luftfahrzeugfahrwerk, das im unteren Teil mit einem Kipphebel (2) versehen ist, der mindestens zwei Achsen (4, 5) trägt, von denen eine vor einer Gelenkverbindung (3) des Kipphebels an dem Fahrwerk und die andere hinter der genannten Gelenkverbindung liegt, wobei eine der Achsen mit einem oder mehreren Rädern (6) ausgestattet ist, die mit Brernsen (7) versehen und ohne einen Antriebsmotor sind, während die andere der Achsen mit einem oder mehreren Rädern (8) ausgestattet ist, die mit Antriebsmotoren (9) versehen und ohne Bremse sind, **dadurch gekennzeichnet, dass** das Fahrwerk einen Nickdämpfer (10) umfasst, der steuerbar ist, um eine Kraft auf den Kipphebel (3) aufzubringen, die dazu neigt, die Räder (8), die mit Antriebsmotoren (9) versehen sind, gegen den Boden zu drücken und die Last, die von den genannten Rädern, die mit Antriebsmotoren versehen sind, aufgenommen wird, zu vergrößern, um deren Wirkungsgrad zum Antrieb des Luftfahrzeugs zu erhöhen.

2. Fahrwerk nach Anspruch 1, bei dem die Räder (6), die mit Bremsen versehen sind, von der vorderen Achse (4) getragen werden, und die Räder (8), die mit Antriebsmotoren versehen sind, von der hinteren Achse (8) getragen werden.

3. Fahrwerk nach Anspruch 1, bei dem der Nickdämpfer (10) auf den Kipphebel einwirkt, um mindestens eine der folgenden Aktionen auszuführen:
- Steuern des Winkels zwischen dem Kipphebel (2) und dem Bein (1) während der Einziehphase des Fahrwerks;
- Dämpfen der Schwingungsbewegungen des Kipphebels (2) um den Zapfen (3);
- Verteilen der vertikalen Last, die von den Rädern aufgenommen wird, indem eine gesteuerte Schubkraft auf den Kipphebel (2) ausgeübt wird.

## Claims

1. An aircraft undercarriage provided at its bottom end with a rocker arm (2) carrying at least two axles (4, 5), including one in front of a hinge (3) between the rocker arm and the undercarriage and the other behind said hinge, one of the axles is fitted with one or more wheels (6) provided with brakes (7) and without drive motor and the other axle is fitted with one or more wheels (8) provided with drive motors (9) and without brake, the undercarriage being **characterized in that** it includes a controllable rocking shock absorber (10) for applying a force on the rocker arm (3) tending to press the wheels (8) provided with drive motors (9) against the ground and to increase the load on said wheels provided with drive motors so as to increase their effectiveness in driving the aircraft.

2. An undercarriage according to claim 1, wherein the wheels (6) provided with brakes are carried by the front axle (4) and the wheels (8) provided with drive motors are carried by the rear axle (5).

3. An undercarriage according to claim 1, wherein the rocking shock absorber (10) acting on the rocker arm to exert at least one of the following actions:
- controlling the angle between the rocker arm (2) and the leg (1) during a stage of raising the undercarriage;
- damping oscillatory movements of the rocker arm (2) about the pivot (3); and
- distributing the vertical load taken up by the wheels by exerting a controlled thrust force on the rocker arm (2).
